# EUROPÄISCHE PATENTSCHRIFT

(11) **EP 1 696 406 B1**
(45) Veröffentlichungstag und Bekanntmachung des Hinweises auf die Patenterteilung: **23.12.2009**
(21) Anmeldenummer: 05022539.0
(22) Anmeldetag: 15.10.2005
(51) Int. Cl.: G09F 13/18, F21S 8/00, G02B 6/00

(54) **Leuchtvorrichtung**
Illuminating device
Dispositif d'éclairage

(30) Priorität: 25.02.2005 DE 202005003265 U
(43) Veröffentlichungstag der Anmeldung: 30.08.2006
(73) Patentinhaber: Spectral Lichttechnik GmbH, 79111 Freiburg (DE)
(72) Erfinder: Neuhorst, Paul Heinrich, 79292 Pfaffenweiler (DE)
(74) Vertreter: Goy, Wolfgang

(56) Entgegenhaltungen:
- WO-A-2004/016897
- CH-A- 438 912
- DE-U1- 29 512 378
- DE-U1- 29 600 431

## Beschreibung

Die Erfindung betrifft eine Leuchtvorrichtung nach dem Oberbegriff des Anspruchs 1.

Bei der erfindungsgemäßen Leuchtvorrichtung geht es ganz allgemein um Anzeigeeinrichtungen oder um Dekorationseinrichtungen unter Verwendung von Licht. Dabei können beispielsweise Schriften, Piktogramme, Logos, Symbole oder auch andere, beispielsweise auch abstrakte Formen (insbesondere für Dekorationseinrichtungen) sichtbar gemacht werden. Der Phantasie der Gestaltungs- und Anwendungsmöglichkeiten sind dabei keine Grenzen gesetzt.

Eine bekannte Leuchtvorrichtung sieht eine Art Milchglasscheibe vor, hinter welcher sich eine Lampe befindet. Wenn die Lampe Licht abstrahlt, leuchtet die Milchglasscheibe.

Eine weitere bekannte Leuchtvorrichtung weist eine lichtleitende Plexiglasscheibe auf, welche mit einer Vielzahl von winzigen Streukörpern dotiert sein kann, welche unterschiedliche Dichten aufweisen kann und welche vor allem eine rückseitige Reflexionsfläche aufweist. In diese lichtleitende Plexiglasscheibe wird von der seitlichen Stirnseite her Licht eingestrahlt, welches sich im Innern der Plexiglasscheibe ausbreitet. Vor allem durch die rückseitige Reflexionsfläche wird das Licht nach vorne abgestrahlt.

Sämtliche bekannten Leuchtvorrichtungen haben den Nachteil, daß sie hinsichtlich der Farbgebungsmöglichkeiten sehr eingeschränkt sind. Es ist zwar möglich, eine Milchglasscheibe mit Bereichen unterschiedlicher Färbung zu versehen oder die Milchglasscheibe mit unterschiedlich farbigen Folien abzukleben, doch ist diese Methode zum einen sehr aufwendig, zum anderen besteht keine Möglichkeit des kontinuierlichen Farbwechsels.

Gleiches gilt auch für die Plexiglasscheibe mit dem seitlich eingestrahlten Licht. Hier ist es nicht möglich, irgendwelche Formen in der Plexiglasscheibe mit wechselnden Lichtfarben zu versehen.

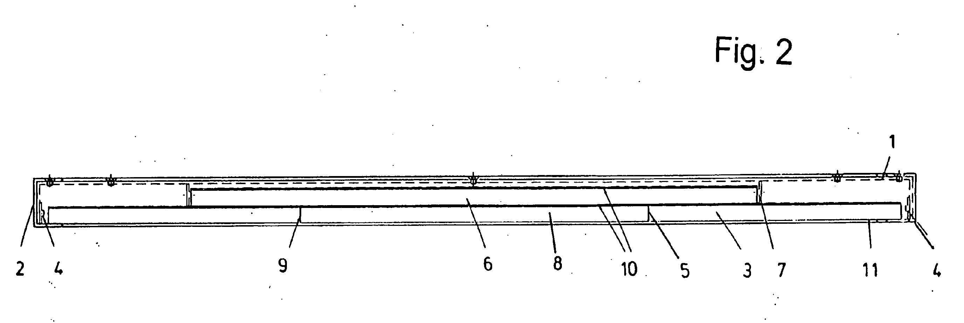

Die WO 2004/016897 A zeigt in verschiedenen Ausführungsformen eine laminatartige Leuchtvorrichtung der eingangs angegebenen Art. Bei der Ausführungsform der Fig. 2 und 3 besteht das Grundprinzip der Leuchtvorrichtung dabei darin, daß insgesamt drei Scheiben vorgesehen sind, wobei sich zwischen diesen Scheiben mit Perforationen versehene Scheiben befinden. In diese perforierten Scheiben wird über seitliche LED's unterschiedlich farbiges Licht eingestrahlt. Im Bereich der einen perforierten Scheibe ist darüber hinaus ein Drucksensor vorgesehen. Das Grundprinzip ist wie folgt: Die beiden LED's werden alternativ betrieben. Im Grundzustand ist die eine LED in Betrieb, so daß die zugeordnete Scheibe aufgrund ihrer Perforationen diffus weiß leuchtet. Durch Druckausübung wird der Drucksensor betätigt. Dieser deaktiviert die eine LED und aktiviert die andere LED, so daß die zugeordnete Scheibe entsprechend ihrer anderen Perforationen auf andere Weise leuchtet.

Die CH 438 912 A zeigt eine Anzeigeeinrichtung mit einer Scheibe, in welche mittels Lampen Licht eingespeist wird. Die Scheibe weist dabei Zeichen auf, welche beim Einspeisen des Lichts erkennbar sind. Bei der Ausführungsform der Fig. 6 bis 8 sind mehrere derartige Systeme hintereinander angeordnet.

Die DE 296 00 431 U1 zeigt eine Rettungszeichenleuchte. Hier sind zwei aneinanderliegende Scheiben vorgesehen, welche durch eine zwischengelegte weiße Folie optisch voneinander getrennt sind. Die Einspeisung des Lichtes erfolgt stirnseitig über Lampen. Die optischen Informationen sollen dabei in zwei Richtungen abgegeben werden, damit die Rettungszeichenleuchte beidseitig erkennbar ist.

Die DE 295 12 378 U1 zeigt ein Leuchtgerät für Dekor- und/oder Reklamezwecke. Das Grundprinzip besteht darin, daß in eine Scheibe mittels einer Lampe Licht seitlich eingestrahlt wird. Die Scheibe ist dabei sandwichartig zwischen zwei Platten festgelegt, wobei diese Platten mit Dekor- und/oder Infodurchbrechungen versehen sind.

Davon ausgehend liegt der Erfindung die **Aufgabe** zugrunde, die Leuchtvorrichtung der eingangs angegebenen Art derart weiterzuentwickeln, daß die farbliche Lichtgestaltung der Leuchtvorrichtung verbessert ist.

Die technische **Lösung** ist gekennzeichnet durch die Merkmale im Kennzeichen des Anspruchs 1.

Die Grundidee der erfindungsgemäßen Leuchtvorrichtung besteht darin, daß zwei lichtleitende Scheiben, insbesondere PlexiScheiben vorgesehen sind, welche hintereinander angeordnet sind. Die vordere Scheibe weist dabei eine oder mehrere, durchgehende Formausnehmungen im Sinne einer Durchbrechung auf. Diese Formausnehmung kann beliebig gestaltet sein, also beispielsweise als Buchstabe, Zahl, Piktogramm, Logo, Symbol oder aber auch nur eine abstrake Form. Die hintere Scheibe deckt die Formausnehmung der vorderen Scheibe ab. In beide Scheiben wird seitlich unterschiedlich farbiges Licht eingestrahlt. Somit wird bei diesem plattenförmigen Lichtleiter vorzugsweise über alle Stirnseiten Licht in diesen Lichtleiter eingekoppelt. Dieses eingekoppelte Licht wird vor allem durch eine rückseitige Reflexionsfläche nach vorne zum Betrachter hin abgestrahlt. Wird die entsprechende Lampe, insbesondere eine Reihe von LED's eingeschaltet, leuchtet die gesamte Fläche gleichmäßig in der entsprechenden Farbe. Der hinter dem vorderen Lichtleiter befindliche hintere Lichtleiter entspricht vom Grundprinzip her dem vorderen Lichtleiter, d. h. es wird seitlich Licht in diesen hinteren Lichtleiter eingekoppelt. Durch die rückseitige Reflexionsfläche tritt das eingekoppelte Licht nach vorne in Richtung Betrachter wieder aus. Wird in die beiden Lichtleiter unterschiedlich farbiges Licht eingestrahlt, leuchtet der vordere Lichtleiter in einer ganz bestimmten Farbe, während der hintere Lichtleiter in einer anderen Farbe leuchtet. Diese vom hinteren Lichtleiter stammende Farbe ist dabei im Bereich der im vorderen Lichtleiter ausgebildeten Formausnehmung erkennbar. Somit leuchtet der Buchstabe, die Zahl, das Symbol etc. in der Farbe des hinteren Lichtleiters, während alle anderen Bereiche in der Farbe des vorderen Lichtleiters leuchten.

Die Weiterbildung gemäß Anspruch 2 stellt eine technisch einfache Möglichkeit zur Schaffung der Formausnehmung in der vorderen, ersten Scheibe dar. So wird für den gewünschten Schriftzug oder das Logo aus der vorderen Scheibe die entsprechende Form ausgelasert mit einem Wasserstrahl ausgeschnitten oder ausgefräst. Andere Methoden zum Ausschneiden sind denkbar.

Es ist zwar grundsätzlich denkbar, daß die in der vorderen Scheibe ausgebildete Formausnehmung als Luftraum ausgebildet ist, doch schlägt die Weiterbildung gemäß Anspruch 3 vor, daß das aus der vorderen Scheibe ausgeschnittene Formstück auf der hinteren Scheibe derart befestigt, insbesondere derart aufgeklebt wird, daß das Licht von der hinteren Scheibe in das Formstück eingekoppelt wird. Damit bilden die hintere Scheibe sowie das vordere Formteil eine optische Einheit, bei welcher das Licht ungehindert von der hinteren Scheibe in das vordere Formstück übergeht. Nachdem das Formstück auf der hinteren Scheibe dauerhaft aufgebracht worden ist, werden die beiden Scheiben derart zusammengefügt, daß das Formstück in der ausgeschnittenen Formausnehmung, nämlich in dem Negativloch der vorderen Scheibe steckt.

Die Weiterbildung gemäß Anspruch 4 hat den Vorteil, daß dadurch ein Einkoppeln von Licht aus der vorderen Scheibe in das Formstück verhindert wird. Die Schnittkante, insbesondere die Laserschnittkante ist dabei vorzugsweise mit einer lichtundurchlässigen Reflexionsfolie bzw. einer Hochglanzfolie beklebt.

Die Weiterbildung gemäß Anspruch 5 hat den Vorteil, daß das Licht nur an einer Seite, nämlich an der zum Betrachter hin gerichteten Vorderseite austritt. Zu diesem Zweck wird die hintere Seite der jeweiligen Scheibe mit einer Reflexionsfolie versehen. Somit befindet sich zwischen den beiden Scheiben im Berührungsbereich eine optische lsolationsschicht, so daß - wie ausgeführt - kein Licht von der hinteren Glasplatte in die vordere Glasplatte dringen kann.

Die Weiterbildung gemäß Anspruch 6 hat den Vorteil, daß das Licht auf der Lichtaustrittsseite gleichmäßig hell über die gesamte Fläche verteilt ist. Bei der Diffusoreinrichtung kann es sich um eine Diffusorplatte oder um eine Diffusorfolie handeln.

Die Weiterbildung gemäß Anspruch 7 schafft sämtliche denkbaren Farbkombinationen. So ist es in der Grundversion denkbar, daß feste Farben eingestellt werden. Die bevorzugte Ausführungsvariante besteht jedoch in einem stetigen Farbwechsel in den beiden Scheiben, so daß die Fläche sowie die in der Fläche befindliche Form jeweils in anderen Farben leuchten. Dadurch entsteht ein permanentes Farbenspiel, welches eine hohe Aufmerksamkeit erzeugt.

Gemäß der Weiterbildung in Anspruch 8 schließlich werden als Lampen vorzugsweise LED's verwendet, welche auf einer Streifenplatine angeordnet werden können, welche sich in den seitlichen Stirnbereichen der Scheiben befinden.

Die Zeichnungen zeigen ein Ausführungsbeispiel. In diesen zeigt:

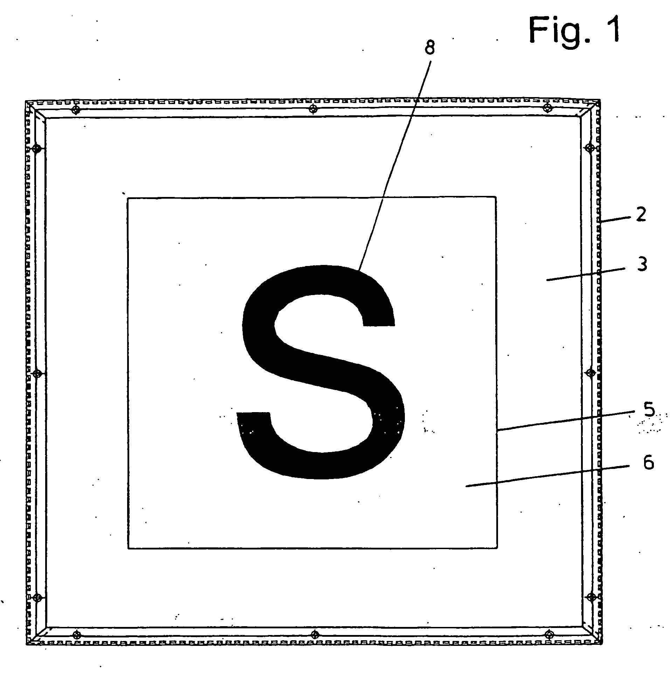

- Fig. 1: eine Ansicht der Leuchtvorrichtung von vorne;
- Fig. 2: eine schematische Längsschnittdarstellung durch die Leuchte in Fig. 1.

Die Leuchtvorrichtung weist ein Trägergehäuse 1 vorzugsweise aus Aluminiumblech sowie einen U-Profilrahmen 2 auf.

In diesem System befindet sich zunächst eine vordere, erste Scheibe 3. Diese Scheibe 3 ist als plattenförmiger Lichtleiter ausgebildet. An den Stirnseiten dieser ersten Scheibe 3 befindet sich eine Vielzahl von Lampen 4 in Form von LED's

In der vorderen, ersten Scheibe 3 befindet sich eine Formausnehmung 5. In dem dargestellten Ausführungsbeispiel handelt es sich bei dieser Formausnehmung 5 um den Buchstaben "S". Andere Formausnehmungen 5 sind denkbar. Es kann sich bei den Formausnehmungen 5 allgemein um Schriften, Piktogramme, Logos, Symbole oder einfach um Phantasiezeichen handeln.

Hinter der vorderen, ersten Scheibe 3 befindet sich eine zweite Scheibe 6. Diese ist vom Grundprinzip her entsprechend der ersten Scheibe 3 ausgebildet. Auch sie weist in den seitlichen Stirnseiten bereichen Lampen 7 in Form von LED's auf.

Auf dieser hinteren, zweiten Scheibe 6 befindet sich ein Formstück 8, welches zuvor aus der vorderen, ersten Scheibe 3 als Formausnehmung 5 herausgeschnitten, insbesondere herausgelasert worden ist. Dieses Formstück 8 wurde derart auf die Vorderseite der hinteren, zweiten Scheibe 6 aufgeklebt, daß die hintere, zweite Scheibe 6 und das Formstück 8 eine optische Einheit derart bilden, daß Licht aus der hinteren, zweiten Scheibe 6 in das Formstück 8 eingekoppelt wird. Zu diesem Zweck kann das Formstück 8 mittels eines entsprechenden Klebers auf die hintere, zweite Scheibe 6 aufgeklebt werden.

Die beiden Scheiben 3, 6 sind derart aufeinandergelegt, daß das Formstück 8 der hinteren, zweiten Scheibe 6 in der Formausnehmung 5 der vorderen, ersten Scheibe 3 zu liegen kommt. Damit von der vorderen, ersten Scheibe 3 kein Licht in das Formstück 8 eingekoppelt wird, ist im Bereich der Schnittkante eine optische Trennschicht 9 beispielsweise in Form einer Hochglanzfolienbeklebung vorgesehen.

Damit weiterhin das in die beiden Scheiben 3, 6 eingekoppelte Licht nach vorne abgestrahlt wird, sind beide Rückseiten der Scheiben 3, 6 jeweils mit einer Reflexionsschicht 10 beispielsweise in Form einer Reflexionsfolie versehen. Da es sich bei der Formausnehmung 5 um eine Durchbrechung in der vorderen, ersten Scheibe 3 handelt, ist dort selbstverständlich keine Rückseite vorhanden, welche mit einer Reflexionsschicht versehen sein könnte.

Schließlich ist die gesamte vordere, erste Scheibe 3 mit einer Diffusoreinrichtung 11, beispielsweise mit einer Diffusorfolie oder mit einer Milchglasscheibe abgedeckt.

### Die Funktionsweise ist wie folgt:

In die vordere, erste Scheibe 3 wird über die seitlichen Lampen 4 Licht eingekoppelt. Die Farbe des Lichts kann dabei wechseln. Es kann aber auch eine ganz bestimmte Farbe eingestellt werden. Das eingekoppelte Licht breitet sich in der vorderen, ersten Scheibe 3 aus und strahlt aufgrund der Reflexionsschicht 10 nach vorne hin ab. Ausgenommen von dieser Lichtabstrahlung ist selbstverständlich der Bereich mit der Formausnehmung 5.

In die hintere, zweite Scheibe 6 wird ein andersfarbiges Licht insbesondere mit einem Farbwechsel eingekoppelt. Das eingekoppelte Licht pflanzt sich in das Formteil 8 fort, welches entsprechend leuchtet, und zwar mit einer anderen Farbe als die Farbe der vorderen, ersten Scheibe 3.

Da zwischen der Berührungsfläche zwischen den beiden Scheiben 3, 6 sich die Reflexionsschicht 10 befindet und da weiterhin zwischen dem Formstück 8 und der vorderen, ersten Scheibe 3 eine optische Trennschicht 9 vorgesehen ist, gibt es durch Lichteinkopplungen keine Vermischungen der Farben einerseits im Bereich des Formstücks 8 und andererseits im restlichen Bereich der vorderen, ersten Scheibe 3.

### Bezugszeichenliste

- 1: Trägergehäuse
- 2: U-Profilrahmen
- 3: erste Scheibe
- 4: erste Lampe
- 5: Formausnehmung
- 6: zweite Scheibe
- 7: zweite Lampe
- 8: Formstück
- 9: optische Trennschicht
- 10: Reflexionsschicht
- 11: Diffusoreinrichtung

## Patentansprüche

1. Leuchtvorrichtung
mit einer ersten lichtleitenden Scheibe (3)welche mit einer durchgehenden Formausnehmung (5) versehen ist,
mit wenigstens einer ersten Lampe (4), welche im Randbereich der ersten Scheibe (3) stirnseitig seitlich Licht ins Innere der ersten Scheibe (3) ein koppelt,
mit einer hinter der ersten Scheibe (3) im Bereich der Formausnehmung (5) angeordneten zweiten lichtleitenden Scheibe (6) sowie
mit wenigstens einer zweiten Lampe (7), welche im Randbereich der zweiten Scheibe (6) stirnseitig seitlich Licht mit einer anderen Farbe als die Farbe der ersten Lampe/n (4) der ersten Scheibe (3) ins Innere der zweiten Scheibe (6) einkoppelt,
wobei die Abstrahlung des eingekoppelten Lichts von den beiden Scheiben (3, 6) hin zum Betrachter in die gleiche Richtung erfolgt,
**dadurch gekennzeichnet,**
**daß** die erste/n Lampe/n (4) und die zweite/n Lampe/n (7) gleichzeitig eingeschaltet sind und
**daß** sich zwischen der Berührungsfläche zwischen den beiden Scheiben (3, 6) eine Reflexionsschicht (10) befindet.

2. Leuchtvorrichtung nach dem vorhergehenden Anspruch,
**dadurch gekennzeichnet,**
**daß** die Formausnehmung (5) aus der ersten Scheibe (3) ausgeschnitten ist.

3. Leuchtvorrichtung nach einem der vorhergehenden Ansprüche,
**dadurch gekennzeichnet,**
**daß** das aus der ersten Scheibe (3) entfernte Formstück (8) der Formausnehmung (5) auf der zweiten Scheibe (6) derart befestigt ist,
**daß** das Formstück (8) und die zweite Scheibe (6) eine optische Einheit bilden und
**daß** das Formstück (8) in der Formausnehmung (5) der ersten Scheibe (3) liegt.

4. Leuchtvorrichtung nach Anspruch 3,
**dadurch gekennzeichnet,**
**daß** zwischen den einander gegenüberliegenden Stirnseiten der ersten Scheibe (3) einerseits und dem Formstück (8) andererseits eine optische Trennschicht (9) vorgesehen ist.

5. Leuchtvorrichtung nach einem der vorhergehenden Ansprüche,
**dadurch gekennzeichnet,**
**daß** die Rückseite der ersten Scheibe (3) - bis auf den Bereich der Formausnehmung (5) - mit einer Reflexionsschicht (10) versehen ist und
**daß** die Rückseite der zweiten Scheibe (6) ebenfalls mit einer Reflexionsschicht (10) versehen ist.

6. Leuchtvorrichtung nach einem der vorhergehenden Ansprüche,
**dadurch gekennzeichnet,**
**daß** die gesamte erste Scheibe (3) vorderseitig von einer Diffusoreinrichtung (11) abgedeckt ist.

7. Leuchtvorrichtung nach einem der vorhergehenden Ansprüche,
**dadurch gekennzeichnet,**
**daß** die Lampe/n (4) der ersten Scheibe (3) und / oder die Lampe/n (7) der zweiten Scheibe (6) entweder mit einem Farbwechsel oder mit keinem Farbwechsel betrieben werden.

8. Leuchtvorrichtung nach einem der vorhergehenden Ansprüche,
**dadurch gekennzeichnet,**
**daß** die Lampe/n (4, 7) LED's sind.

## Claims

1. Lighting device
with a first light-conductive disc (3) which is fitted with a through moulded recess (5),
with at least a first lamp (4) which in the edge area of the first disc (3) on the face laterally couples light into the inside of the first disc (3),
with a second light-conductive disc (6) arranged behind the first disc (3) in the area of the moulded recess (5), and
with at least a second lamp (7) which in the edge area of the second disc (6) on the face laterally couples light of a different colour from the colour of the first lamp(s) (4) of the first disc (3) into the inside of the second disc (6),
wherein the coupled light from the two discs (3, 6) is radiated towards the observer in the same direction,
**characterised in that**
the first lamp(s) (4) and the second lamp(s) (7) are switched on at the same time, and
a reflection layer (10) is present between the contact surfaces between the two discs (3, 6).

2. Lighting device according to the preceding claim, **characterised in that** the moulded recess (5) is cut out of the first disc (3).

3. Lighting device according to any of the preceding claims, **characterised in that** the moulding (8) of the moulded recess (5) removed from the first disc (3) is attached to the second disc (6) such that the moulding (8) and the second disc (6) form an optical unit and the moulding (8) lies in the moulded recess (5) of the first disc (3).

4. Lighting device according to claim 3, **characterised in that** an optical separating layer (9) is provided between the opposing faces of the first disc (3) firstly and the moulding (8) secondly.

5. Lighting device according to any of the preceding claims, **characterised in that** the back of the first disc (3) - except for the area of the moulded recess (5) - is fitted with a reflection layer (10) and **in that** the back of the second disc (6) is also fitted with a reflection layer (10).

6. Lighting device according to any of the preceding claims, **characterised in that** the entire first disc (3) is covered on the front by a diffuser device (11).

7. Lighting device according to any of the preceding claims, **characterised in that** the lamp(s) (4) of the first disc (3) and/or the lamp(s) (7) of the second disc (6) are operated either with a colour change or with no colour change.

8. Lighting device according to any of the preceding claims, **characterised in that** the lamp(s) (4, 7) are LEDs.

## Revendications

1. Dispositif d'éclairage
avec une première vitre conduisant la lumière (3) qui est pourvue d'un évidement préformé (5) traversant,
avec au moins une première lampe (4), laquelle injecte de la lumière à l'intérieur de la première vitre (3) par la face d'extrémité latérale dans la région du bord de la première vitre (3),
avec une deuxième vitre conduisant la lumière (6) disposée derrière la première vitre (3) dans la région de l'évidement préformé (5) ainsi que
avec au moins une deuxième lampe (7) qui injecte à l'intérieur de la deuxième vitre (6), par la face d'extrémité latérale dans la région du bord de la deuxième vitre (6), une lumière d'une autre couleur que la couleur de la ou des première(s) lampe(s) (4) de la première vitre (3),
les deux vitres (3, 6) rayonnant la lumière injectée dans la même direction vers l'observateur,
**caractérisé en ce**
**que** la ou les première(s) lampe(s) (4) et la ou les deuxième(s) lampe(s) (7) sont allumées en même temps et
**qu'**il se trouve une couche réfléchissante (10) entre les surfaces de contact entre les deux vitres (3, 6).

2. Dispositif d'éclairage selon la revendication précédente,
**caractérisé en ce**
**que** l'évidement préformé (5) est découpé dans la première vitre (3).

3. Dispositif d'éclairage selon une des revendications précédentes,
**caractérisé en ce**
**que** la pièce préformée (8) de l'évidement préformé (5) retirée de la première vitre (3) est fixée sur la deuxième vitre (6) de façon
**que** la pièce préformée (8) et la deuxième vitre (6) forment une unité optique et
**que** la pièce préformée (8) se trouve dans l'évidement préformé (5) de la première vitre (3).

4. Dispositif d'éclairage selon la revendication 3,
**caractérisé en ce**
**qu'**une couche de séparation optique (9) est prévue entre les faces d'extrémité opposées l'une à l'autre de la première vitre (3) d'une part et la pièce préformée (8) d'autre part.

5. Dispositif d'éclairage selon une des revendications précédentes,
**caractérisé en ce**
**que** la face arrière de la première vitre (3) - à l'exception de la région de l'évidement préformé (5) - est pourvue d'une couche réfléchissante (10) et
**que** la face arrière de la deuxième vitre (6) est également pourvue d'une couche réfléchissante (10).

6. Dispositif d'éclairage selon une des revendications précédentes,
**caractérisé en ce**
**que** toute la première vitre (3) est recouverte sur sa face avant par un dispositif diffuseur (11).

7. Dispositif d'éclairage selon une des revendications précédentes,
**caractérisé en ce**
**que** l'on fait fonctionner la ou les lampe(s) (4) de la première vitre (3) et/ou la ou les lampe(s) (7) de la deuxième vitre (6) soit avec un changement de couleur, soit sans changement de couleur.

8. Dispositif d'éclairage selon une des revendications précédentes,
**caractérisé en ce**
**que** la ou les lampe(s) (4, 7) sont des LED.
